# EUROPÄISCHE PATENTSCHRIFT

(11) **EP 0 553 475 B1**
(45) Veröffentlichungstag und Bekanntmachung des Hinweises auf die Patenterteilung: **22.04.1998**
(21) Anmeldenummer: 92121575.2
(22) Anmeldetag: 18.12.1992
(51) Int. Cl.: B32B 31/00

(54) **Kaschiermaschine**
Laminator
Dispositif de laminage

(30) Priorität: 30.01.1992 DE 4202553
(43) Veröffentlichungstag der Anmeldung: 04.08.1993
(73) Patentinhaber: DU PONT DE NEMOURS (DEUTSCHLAND) GMBH, 61352 Bad Homburg (DE); E.I. DU PONT DE NEMOURS AND COMPANY, Wilmington Delaware 19898 (US)
(72) Erfinder: Wojtanowitsch, Ladislaus, W-8750 Aschaffenburg (DE); Gehrer, Gregor, A-5400 Hallein/Rehhof (AT); Köll, Markus, A-9971 Matrei (AT); Nowak, Alfred, A-9020 Klagenfurt (AT)
(74) Vertreter: Pistor, Wolfgang, Dr. Dipl.-Chem.

(56) Entgegenhaltungen:
- EP-A- 0 260 526
- EP-A- 0 360 269
- GB-A- 2 188 074

## Beschreibung

Die Erfindung bezieht sich auf einen Laminator zum Laminieren eines Films auf einen Träger, mit einem zwischen einer ortsfest gelagerten Basiswalze und einer oberen Andruckwalze gebildeten oberen Preßspalt, dem der Träger über eine Einlaufplatte und ein Film von einer oberen Vorratsrolle nach Entfernung einer Schutzfolie zuführbar ist, wobei die obere Andruckwalze mittels einer Umschaltvorrichtung aus einer Ruhestellung, in der der obere Preßspalt geöffnet ist, in eine Arbeitsstellung, in der der obere Preßspalt geschlossen und der Walzenantrieb eingeschaltet ist, und zurück verstellbar ist.

Ein solcher Laminator ist beispielsweise unter der Bezeichnung "CROMALIN-Laminator 2700" (registered trade mark) der Anmelderin bekannt. Er wird im Zusammenhang mit einem Farbprüfsystem verwendet. Nach Belichtung des Laminats, das aus einem blattförmigen Träger und einem lichtempfindlichen Film besteht, verbleiben klebrige Bereiche, an denen - nach Abziehen einer Deckschicht - Toner haften bleibt. Nach erfolgtem Laminieren wird der Film ausgangsseitig auf einer Schneidplatte abgeschnitten. Die anschließende Filmbahn verbleibt daher mit ihrem Anfangsabschnitt im geöffneten Preßspalt, wo sie für den nächsten Laminier-Vorgang zur Verfügung steht.

Für einen 4-Farben-Druck muß ein Träger nacheinander mit vier lichtempfindlichen Filmen versehen werden, die nach Belichtung mit unterschiedlichen Tonern versehen werden. Vielfach besteht der Wunsch, anschließend noch einen Schutzfilm aufzubringen, um die oberste Tonerschicht abzudecken. Hierzu muß im Laminator der lichtempfindliche Film durch einen Schutzfilm ersetzt werden. Dieser Tausch ist anschließend wieder rückgängig zu machen. Hierbei ergibt sich ein erheblicher Zeitverlust und ein hoher Filmverschnitt. Die Alternative, zwei Laminatoren nebeneinander aufzustellen, erfordert die doppelten Investitionskosten und ist oft auch aus Platzgründen nicht durchführbar.

Es ist auch schon bekannt (US-PS 35 47 730 and EP-A-0 360 269), Träger, wie Platten, beidseitig mit einer lichtempfindlichen Bahn zu laminieren, indem man die Schichtung durch einen Preßspalt zwischen zwei Heizwalzen hindurchlaufen läßt. Theoretisch ist es hierbei möglich, eine nur einseitige Beschichtung vorzunehmen, indem die eine lichtempfindliche Bahn fortgelassen wird. Jeder Wechsel des Materials erfordert aber ein Neueinführen der lichtempfindlichen Bahn in den Preßspalt.

Der Erfindung liegt die Aufgabe zugrunde, einen Laminator der eingangs beschriebenen Art anzugeben, der auf einfache Weise die wahlweise Beschichtung eines insbesondere blattförmigen Trägers mit zwei unterschiedlichen Filmen ermöglicht.

Diese Aufgabe wird erfindungsgemäß dadurch gelöst, daß die Basiswalze mit einer unteren Andruckwalze einen unteren Preßspalt bildet, dem der Träger über eine Einlaufplatte alternativ zum oberen Preßspalt und ein zweiter Film von einer unteren Vorratsrolle nach Entfernung einer Schutzfolie zuführbar ist und daß die untere Andruckwalze mittels einer Umschaltvorrichtung aus einer Ruhestellung, in der der untere Preßspalt geöffnet ist, in eine Arbeitsstellung, in der der untere Preßspalt geschlossen und der Walzenantrieb in entgegengesetzter Richtung eingeschaltet ist, und zurück verstellbar ist.

Bei dieser Konstruktion kann der Benutzer den Träger wahlweise auf der Oberseite oder auf der Unterseite mit einem Film versehen. Es braucht lediglich der eine oder der andere Preßspalt wirksam gemacht zu werden, um den Träger mit unterschiedlichem Filmmaterial zu laminieren. Wegen des Vorhandenseins zweier Preßspalte kann der jeweils nicht benutzte Film im Preßspalt verbleiben, so daß er sich an der für den nächsten Laminier-Vorgang richtigen Stelle befindet. Platzbedarf und Kosten sind wesentlich geringer als bei Verwendung zweier Laminatoren. Ein Austausch der Vorratsrollen ist nur nach vollständigem Verbrauch erforderlich.

Der Laminator eignet sich für die verschiedensten Anwendungszwecke, bei denen zwei unterschiedliche Filme aufgebracht werden müssen. Schon bei lichtempfindlichen Filmen gibt es mehrere Arten (als Positivfilm und als Negativfilm), mehrere Qualitäten (z.B. bezüglich des Auflösungsvermögens) und verschiedene Breiten. Es besteht auch die Möglichkeit, aus ästhetischen Gründen verschiedenfarbige Folien auf einem Träger zu laminieren. Das Laminieren kann in kaltem Zustand erfolgen oder durch eine Beheizung unterstützt sein.

Im letztgenannten Fall empfiehlt es sich, daß die Basiswalze angetrieben ist und die beiden Andruckwalzen beheizbar sind. Hier sind die Funktionen des Antriebs und der Beheizung getrennt, was konstruktive Vereinfachungen mit sich bringt. Außerdem erfolgt die Wärmezufuhr durch den Film hindurch. Sie kann daher optimal eingestellt werden und ist nicht von der Dicke des Trägermaterials abhängig.

Bei einer bevorzugten Ausführungsform gibt es eine gemeinsame Umschaltvorrichtung, in deren Endlagen jeweils die eine Andruckwalze die Arbeitsstellung und die andere Andruckwalze die Ruhestellung einnimmt, während in einer Zwischenstellung beide Andruckwalzen von der Basiswalze abgehoben sind. Hierdurch wird der Aufbau und die Bedienung des Laminators erheblich vereinfacht.

Konstruktiv empfiehlt es sich, daß die beiden Andruckwalzen in gemeinsamen Seitenteilen gelagert sind, die um eine ortsfeste Achse schwenkbar sind. Die Seitenteile liegen außerhalb des Laminier-Arbeitsbereichs und können auch noch weitere Funktionen übernehmen.

Bei einem bevorzugten Ausführungsbeispiel ist dafür gesorgt, daß die Umschaltvorrichtung eine Schwenkachse aufweist, die mittels eines Hebels um einen vorbestimmten Winkel drehbar ist und zwei Exzenterscheiben trägt, und daß die Seitenteile je zwei einander gegenüberliegende Stützvorrichtungen aufweisen, die an den Exzenterscheiben angreifen. Der Hebel ermöglicht es auf einfache Weise, die beiden Seitenteile und damit die von ihnen getragenen Teile in eine von zwei Arbeitspositionen oder in eine Ruheposition zu bringen.

Mit Vorteil weist jede Stützvorrichtung eine vorgespannte Feder auf, die zwischen Exzenterscheibe und Seitenteil wirksam ist. Hierdurch wird in den Endlagen der Seitenteile ein vorbestimmter Preßdruck zwischen Andruckwalze und Basiswalze erzielt. Zweckmäßigerweise ist die Vorspannung einstellbar, um das gewünschte Laminierergebnis zu erzielen.

Des weiteren empfiehlt es sich, daß an den Seitenteilen je eine Feder angreift, die das Gewicht der Seitenteile und der von ihnen getragenen Bauelemente zumindest teilweise kompensiert. Durch die Gewichts-Kompensation lassen sich im unteren Preßspalt nahezu die gleichen Laminierbedingungen schaffen wie im oberen Preßspalt.

Mit Vorteil ist ein gemeinsamer Einlaufplattenabschnitt vorgesehen, der zusammen mit den Andruckwalzen derart verstellbar ist, daß er auf den jeweils geschlossenen Preßspalt weist. Dies ist platzsparend und erleichtert den Betrieb.

Insbesondere kann der gemeinsame Einlaufplattenabschnitt um eine ortsfeste Schwenkachse schwenkbar und über einen Mitnehmer von den schwenkbaren Seitenteilen verstellbar sein.

Hierbei empfiehlt es sich, daß die Schwenkachse des Einlaufplattenabschnitts, dessen Gelenk, die Schwenkachse der Seitenteile und die Achse der Basiswalze in Durchlaufrichtung hintereinander angeordnet sind. All dies führt zu einer einfachen, platzsparenden Konstruktion.

Günstig ist es auch, daß jedem Preßspalt ausgangsseitig eine Filmklemmvorrichtung zugeordnet ist. Hiermit können die jeweils nicht genutzten Filme in einer Lage gespannt gehalten werden, in der sie weder von der angetriebenen Basiswalze mitgenommen werden noch von der beheizten Andruckwalze eine zu hohe Temperaturbelastung erfahren.

Wichtig ist es ferner, daß jedem Preßspalt ausgangsseitig eine ortsfeste Schneidplatte zugeordnet ist, die an der Oberseite eine Schneidfläche trägt. Die Bedienungsperson kann daher jeweils nach dem Durchlauf des Trägers den Film bequem abschneiden. Hierdurch kann der Abfall an Filmmaterial kleingehalten werden.

Besonders günstig ist es, daß zur Bildung der Filmklemmvorrichtungen die obere Schneidplatte schwenkbar und mit einem Klemmabschnitt gegen eine feststehende obere Klemmleiste anlegbar ist und eine untere Klemmleiste schwenkbar und gegen einen Klemmabschnitt der feststehenden unteren Schneidplatte anlegbar ist. Durch die Kombination von Schneidplatte und Filmklemmvorrichtung ergibt sich eine gedrungene Bauweise mit äußerst geringem Abfall an Filmmaterial.

Hierbei sollte der Klemmabschnitt bzw. die Klemmleiste eine elastische Auflage besitzen. Damit ergibt sich eine sichere Klemmung auch bei unterschiedlich dicken Filmen.

Mit besonderem Vorteil weist die Umschaltvorrichtung eine Schwenkachse auf, die Exzenter zum Verschwenken der oberen Schneidplatte und Hebel zum Halten der unteren Klemmleiste trägt. Die Klemmvorrichtungen werden daher automatisch bei Betätigung der Umschaltvorrichtung bedient. Insbesondere kann die Schwenkachse die gleiche sein, die über Exzenterscheiben die Seitenteile verstellt.

In weiterer Ausgestaltung der Erfindung gibt es eine obere Leitvorrichtung und eine untere Leitvorrichtung, die den Preßspalten im Weg des Films vorgeschaltet sind und je aus zwei Leitwalzen bestehen, von denen die eine ortsfest und die andere in den Seitenteilen gelagert ist. In der Arbeitsstellung liegen die beiden Leitwalzen aneinander und ermöglichen eine sichere Trennung zwischen Film und Schutzfolie. In der Ruhestellung sind die Leitwalzen voneinander getrennt, so daß der Film keine Druckstelle o.dgl. erhält.

Sehr günstig ist es, daß beide Vorratsrollen je mit einer Vorrichtung zum Bremsen und Spannen des Films versehen sind. Diese Vorrichtungen ermöglichen einerseits ein kontrolliertes Bremsen beim Abziehen des Films und andererseits ein Spannen des jeweils nicht für die Lamination erforderlichen Films beim Umschalten. Hierdurch wird bewirkt, daß der Film von der Basiswalze abgehoben wird, so daß diese in Drehrichtung angetrieben werden kann, ohne den nicht benötigten Film zu beschädigen.

Insbesondere kann die Vorrichtung zum Bremsen und Spannen ein Bremselement aufweisen, das reibschlüssig auf die Vorratsrolle wirkt, durch eine Feder belastet ist, unter dem Einfluß des Abziehens des Films um einen begrenzten Winkel schwenkbar und unter dem Einfluß der Feder um den begrenzten Winkel zurück schwenkbar ist. Eine solche Vorrichtung läßt sich platzsparend an den Enden der Achse der Vorratsrolle anbringen.

Außerdem empfiehlt es sich, daß Schalter zur Freigabe des Walzenantriebs im Seitenteil-Schwenkweg angeordnet und vom Seitenteil jeweils in einer seiner Endlagen betätigbar sind. Nach Erreichen der Endlage, in der ein Preßspaltgeschlossen ist, kann der Antriebsmotor automatisch mit der richtigen Drehrichtung eingeschaltet werden.

Sehr nützlich ist auch eine Sensorvorrichtung, die das Ende des einlaufenden Trägers detektiert und in Abhängigkeit hiervon den Walzenantrieb mit Zeitverzögerung abschaltet. Die Zeitverzögerung ist so gewählt, daß der Antriebsmotor automatisch abschaltet, wenn der Träger den Preßspalt verlassen hat und infolge seiner Massenträgheit mit seiner hinteren Kante im Bereich der zugehörigen Schneidplatte liegt.

Besondere Vorteile bietet es, wenn die Basiswalze einen Metallkern besitzt und mit einer Antihaftschicht versehen ist. Diese Antihaftschicht stellt sicher, daß auch sehr dünne Träger, beispielsweise mit einem Gewicht von 80 bis 120 g/m², den Preßspalt sicher verlassen und nicht etwa von der Basiswalze mitgenommen werden.

Insbesondere kann zwischen Metallkern und Antihaftschicht eine elastische Schicht vorgesehen sein. Diese ermöglicht es, den Träger auf einem schmalen Flächenbereich statt auf einer Linie abzustützen, was durch Vermeidung hoher Flächenpressungen ein gleichmäßigeres Laminieren ermöglicht. Die Andruckwalzen sind zweckmäßigerweise ebenfalls mit einer elastischen Schicht versehen.

Mit Vorteil nimmt der Durchmesser der Basiswalze zu den Enden hin zu. Eine leichte konkave Form, beispielsweise eine Einschnürung von 0,03 bis 0,05 mm, verbessert den gleichmäßigen Andruck im Walzenspalt über die Walzenlänge.

Die Erfindung wird nachstehend anhand eines in der Zeichnung dargestellten, bevorzugten Ausführungsbeispiels näher erläutert. Es zeigen:
- Fig. 1: einen schematischen Vertikalschnitt durch einen erfindungsgemäßen Laminator,
- Fig. 2: schematisch und in vergrößerter Darstellung eine Außenansicht des Laminators,
- Fig. 3: einen Teilquerschnitt längs der Linie A-A in Fig. 1 und
- Fig. 4: einen Schnitt durch die Brems- und Spannvorrichtung.

Ein Maschinengestell 1 weist zwei im Abstand angeordnete Seitenwände 2 auf, in denen eine Basiswalze 3 gelagert ist. Sie ist von einem Motor 4 über einen Riementrieb 5 und eine Riemenscheibe 6 antreibbar. Sie besitzt einen Metallkern 7 aus Aluminium und/oder Stahl, auf den direkt oder unter Zwischenschaltung einer elastischen Schicht 8 eine Antihaftschicht 9 aufgebracht ist. Diese kann insbesondere aus Polytetrafluoräthylen bestehen. Dieses Material ist abriebfest und leicht reinigbar und ermöglicht durch Aufrauhen eine entsprechende Reibungsmitnahme der Träger. Insbesondere kann diese Schicht als Schrumpfschlauch aufgebracht werden. Dieser kann beispielsweise eine Dicke von etwa 0,3 mm haben. Die optimale Oberfläche der Basiswalze 3 sollte zur Mitte hin etwas eingezogen sein, wobei eine Durchmesserverkleinerung von 0,03 bis 0,05 mm günstig ist.

Die Basiswalze 3 bildet zusammen mit einer oberen Andruckwalze 10 einen oberen Preßspalt 11 und zusammen mit einer unteren Andruckwalze 12 einen Preßspalt 13. Die beiden Andruckwalzen sind in Seitenteilen 14 gelagert, welche zu beiden Seiten außerhalb der Seitenwände 2 angeordnet und um eine Achse 15 schwenkbar sind. Aus der veranschaulichten Zwischen- oder Mittelstellung kann durch Verschwenken der Seitenteile 14 der obere Preßspalt 11 oder der untere Preßspalt 13 geschlossen werden. Die Andruckwalzen besitzen ebenfalls einen metallischen Kern 16. Dieser ist mit einer elastischen Schicht 17, beispielsweise aus Silikongummi, versehen. Außerdem sind die Andruckwalzen durch einen Wärmeträger beheizbar, was durch eine Zuleitung 18 bzw. 19 angedeutet ist.

Die Seitenteile 14 sind Teile einer Umschaltvorrichtung 20, zu der auch eine Schwenkachse 21 gehört, die mit Hilfe eines an ihr angebrachten Hebels 22 nach beiden Seiten um vorbestimmte Winkel drehbar ist. An der Schwenkachse 21 sind im Bereich der Seitenteile 14 zwei kreisförmige Exzenterscheiben 23 angebracht, die mit Hilfe von Rastvorrichtungen, von denen die Rastvorrichtung 24 für die Mittelstellung veranschaulicht ist, in drei vorbestimmten Winkelstellungen arretiert werden können. Auf einander gegenüberliegenden Seiten der Exzenterscheiben 23 greifen zwei Stützvorrichtungen 25 und 26 an, die wie folgt aufgebaut sind: In einem an dem Seitenteil 14 befestigten Gehäuse 27 ist eine vorgespannte Feder 28 angeordnet, die sich an einer Einstellschraube 29 abstützt. Die Feder 28 wirkt über einen Stößel 30 auf einen Hebel 31, der um eine Achse 32 am Seitenteil 14 schwenkbar ist und mittels einer Kugel 33 an der Exzenterscheibe 23 anliegt. Auf diese Weise ist sichergestellt, daß in den Arbeitsstellungen die jeweilige Andruckwalze mit einer von der Feder 28 bestimmten Kraft an der Basiswalze 3 anliegt. Außerdem erstrecken sich zwei Federn 34 zwischen dem Maschinengestell 1 und den Seitenteilen 14. Sie kompensieren zumindest einen Teil des Gewichts der Seitenteile 14 und der von ihnen getragenen Bauelemente. Die Anpreßverhältnisse sind daher im unteren Preßspalt 13 ähnlich wie im oberen Preßspalt 11.

Blattförmige Träger 35, die aus Papier, Pappe, Kunststoff o.dgl. und insbesondere aus sehr dünnem Papier bestehen können, werden über einen Einlauftisch 36 einer aus zwei Bürsteneinheiten bestehenden Antistatik-Einrichtung 37 zugeführt. Jede Bürsteneinheit besitzt Metall- bzw. Kohlefasern zur Beseitigung elektrischer Aufladungen und Ziegennaare o.dgl. zum Abstreifen von Schmutzpartikeln. Ein Einlaufplattenabschnitt 38 kann aus der veranschaulichten Mittellage wahlweise in die obere oder untere gestrichelte Lage verschwenkt werden, so daß der jeweilige Träger 35 entweder über eine Einlaufplatte 39 dem oberen Preßspalt 11 oder über eine untere Einlaufplatte 40 dem unteren Preßspalt 13 zugeführt wird. Zu diesem Zweck ist der Einlaufplattenabschnitt 38 um eine gehäusefeste Achse 41 schwenkbar. Außerdem ist er auf zapfenförmigen Mitnehmern 42 an den Seitenteilen 14 abgestützt. Auf diese Weise schwenkt der Einlaufplattenabschnitt 38 beim Schließen des oberen Preßspaltes 11 nach oben und beim Schließen des unteren Preßspaltes 13 nach unten.

Von einer an den Seitenwänden 2 gelagerten oberen Vorratsrolle 43 wird eine geschichtete Bahn 44 abgezogen, die im Bereich einer Leitvorrichtung 45 in einen Film 46 und eine Schutzfolie 47 aufgeteilt wird, die auf einer Aufwickelrolle 48 gesammelt wird. In ähnlicher Weise gibt es eine Vorratsrolle 49 für eine untere geschichtete Bahn 50, die im Bereich einer Leitvorrichtung 51 in einen Film 52 und eine Schutzfolie 53 aufgeteilt wird, die auf einer Aufwickelrolle 54 gesammelt wird. Die Vorratsrollen 43 und 49 werden durch den abgezogenen Film gedreht. Sie nehmen über eine Reibradkupplung mit den Reibrädern 55a, 55b bzw. 55c, 55d die Aufwickelrollen 48 bzw. 54 mit. Jede Leitvorrichtung besteht aus einer Leitrolle 56 bzw. 56', die fest an den Seitenwänden 2 gelagert ist, und aus einer zweiten Leitrolle 57 bzw. 57', die in den Seitenteilen 14 gelagert und mit einer elastischen Schicht 58 versehen ist. Beim Verschwenken der Seitenteile 14 wird bei der jeweils aktiven Leitvorrichtung 45 bzw. 51 die Leitwalze 57 bzw. 57' an die Leitwalze 56 bzw. 56' angedrückt, wodurch das Trennen von Film und Schutzfolie erleichtert wird, ohne daß in den Ruhezeiten eine unerwünschte Preßstelle entsteht.

Am Ausgang des oberen Preßspalts ist eine Schneidplatte 59 vorgesehen, die an der Oberseite eine Schneidfläche 60 besitzt. Dem unteren Preßspalt 13 ist eine Schneidplatte 61 nachgeschaltet, die eine obere Schneidfläche 62 besitzt. Die obere Schneidplatte 59 ist Teil einer Filmklemmvorrichtung 63. Zu diesem Zweck ist sie um eine ortsfeste Achse 64 schwenkbar und kann mit einem Klemmabschnitt 65 gegen eine feststehende obere Klemmleiste angelegt werden. Die untere Schneidplatte 61 ist ortsfest angeordnet und besitzt zur Bildung einer Filmklemmvorrichtung 67 einen Klemmabschnitt 68, gegen den eine Klemmleiste 69 anlegbar ist. Diese ist an zwei Hebeln 70 angebracht, welche von der Schwenkachse 21 getragen werden. Auf dieser Schwenkachse sitzen auch Exzenter 71, welche die Schneidplatte 59 mittels eines U-förmigen Mitnehmers verschwenken. Die Klemmleiste 66 und der Klemmabschnitt 69 tragen je eine elastische Auflage.

Im Schwenkweg des einen Seitenteils 14 befinden sich zwei Schalter 72 und 73, die betätigt werden, wenn das Seitenteil 14 die jeweilige Endstellung erreicht. Durch Schalterbetätigung wird der Motor 4 in der jeweils richtigen Drehrichtung freigegeben und kann dann durch einen nicht veranschaulichten Fußschalter eingeschaltet werden. Ein Sensor 74 am Einlaufplattenabschnitt 38, insbesondere ein photoelektrischer Sensor ermittelt, wann die hintere Kante des Trägers 35 über ihn hinwegläuft und schaltet den Motor 4 nach einer vorgegebenen zeitlichen Verzögerung ab. Diese zeitliche Verzögerung ist so bemessen, daß der Träger mit seiner Hinterkante etwa im Bereich der Schneidfläche 60 bzw. 62 zur Ruhe kommt.

Hitzeschilde 75 und 76 schützen die Inneneinrichtung und die Film-Vorratsrollen vor der Wärmestrahlung der Andruckwalzen 10 bzw. 12.

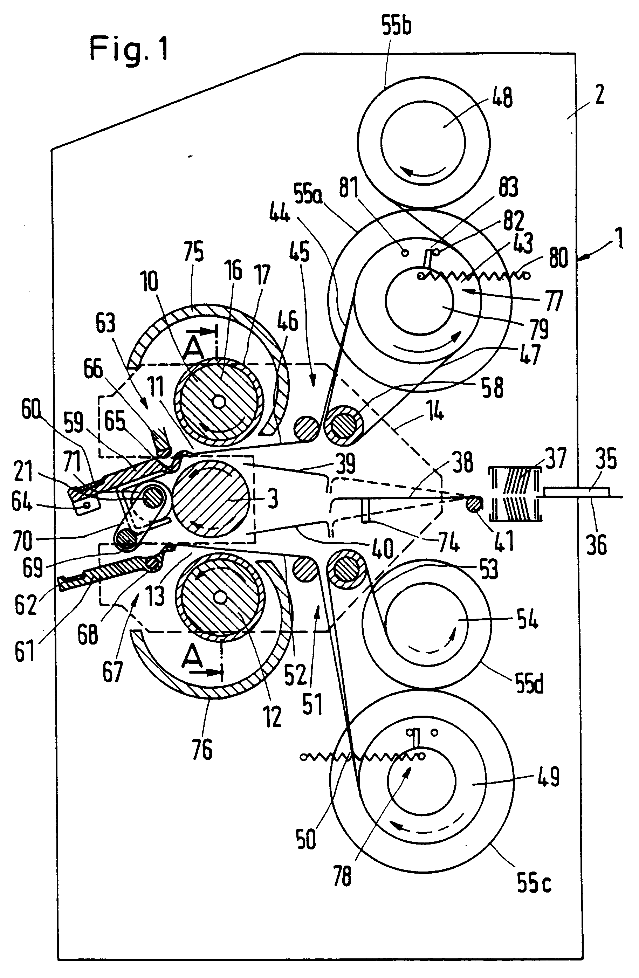

In Fig. 1 ist schematisch eine Brems- und Spannvorrichtung 77 für die Vorratsrolle 43 und eine Brems- und Spannvorrichtung 78 für die Vorratsrolle 49 veranschaulicht. Die Vorrichtung 77 besitzt ein scheibenförmiges Bremselement 79, das reibschlüssig mit der Vorratsrolle 43 zusammenwirkt. Das Bremselement steht unter der Einwirkung einer Feder 80 und ist zwischen zwei festen Anschlägen 81 und 82, zwischen denen sich ein mit dem Bremselement beweglicher Anschlag 83 befindet, um einen begrenzten Winkel schwenkbar. Wird ein Film 46 von der Vorratsrolle 43 abgezogen, schwenkt das Bremselement bis gegen den Anschlag 81. Wird der Preßspalt 11 geöffnet, kehrt das Bremselement 79 unter dem Einfluß der Feder 80 in die veranschaulichte Ruhelage zurück, wobei gleichzeitig der Film gespannt und von der Basiswalze 3 abgehoben wird. Die Brems- und Spannvorrichtung 78 hat einen ähnlichen Aufbau.

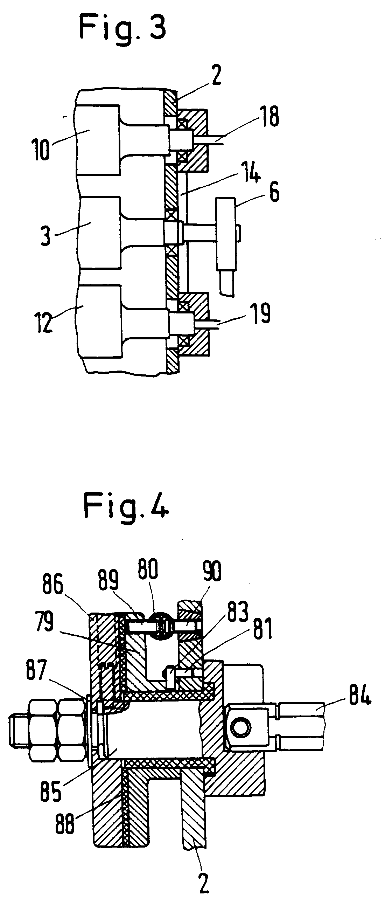

Die konstruktive Lösung einer solchen Vorrichtung ist in Fig. 4 veranschaulicht. Die Achse 84 der Vorratsrolle ist über eine Kupplung mit einer Nabe 85 verbunden, die an der Außenseite eine Druckscheibe 86 trägt. Diese wird durch eine einstellbare Tellerfeder 87 gegen den Reibbelag 88 des scheibenförmigen Bremselements 79 gedrückt. Dieses ist über den begrenzten Winkel um die Nabe 85 schwenkbar. An einem Stift 89 greift die Feder 80 an, die am anderen Ende an einem Stift 90 an der Seitenwand 2 befestigt ist.

Die Zeichnungen zeigen die Mittelstellung, in der beide Preßspalte geöffnet sind. Soll eine Laminierung im oberen Preßspalt 11 erfolgen, wird der Hebel 22 im Uhrzeigergegensinn verschwenkt, wodurch die Seitenteile 14 im Uhrzeigergegensinn geschwenkt werden, bis die obere Andruckwalze 10 mit der Basiswalze 3 in Kontakt kommt und der obere Preßspalt geschlossen wird. Gleichzeitig werden die Leitwalzen 56 und 57 gegeneinander gepreßt. Durch Verdrehen des Exzenters 71 wird die obere Schneidplatte 59 abgesenkt und dadurch die Klemmvorrichtung 63 noch weiter geöffnet. Außerdem ist der Einlaufplattenabschnitt 38 in seine obere Lage geschwenkt. Schließlich ist der Freigabe-Schalter 72 betätigt worden. All diese Maßnahmen sind allein von der Betätigung des Hebels 22 abhängig. Bei Betätigung eines Fußschalters läuft der Motor an. Ein Träger 35 wird durch die Antistatik-Vorrichtung 37 über die obere Einlaufplatte 39 dem Preßspalt 11 zugeführt, in welchem er mit dem Film 46 laminiert wird. Hierbei wird die Schichtung von der Vorratsrolle 43 abgezogen und die Schutzfolie 47 von der Aufwickelrolle 48 aufgenommen. Sobald die Hinterkante des Trägers 35 den Sensor 74 erreicht, gibt dieser ein Signal ab, das nach einer gewissen Zeit die Abschaltung des Motors 4 bewirkt. Die Hinterkante liegt nun im Bereich der Schneidfläche 60, so daß die Bedienungsperson den Film bequem abschneiden kann. Alle Drehbewegungen dieses Laminiervorganges sind durch ausgezogene Pfeile angedeutet.

Beim Absenken der Seitenteile 14 wird auch die Klemmvorrichtung 67 geschlossen und der untere Film festgeklemmt. Gleichzeitig wird die untere Andruckwalze 12 und die untere Leitwalze 57' abgesenkt. Dies führt zu einer Entspannung von Film und Schutzfolie und daher auch der geschichteten Bahn 50. Die zugehörige Feder vermag deshalb das Bremselement der Brems- und Spannvorrichtung 78 entgegen der Abzugsrichtung zu drehen und dadurch den Film zu spannen. Er kommt daher außer Eingriff mit der Basiswalze 3. Wenn daher diese Basiswalze 3 bei wirksamem oberen Preßspalt 11 im Uhrzeigergegensinn dreht, besteht keine Gefahr, daß der untere Film von der Walzenoberfläche mitgenommen wird und die Zugkraft die Haltekraft der Klemmvorrichtung 67 übersteigt.

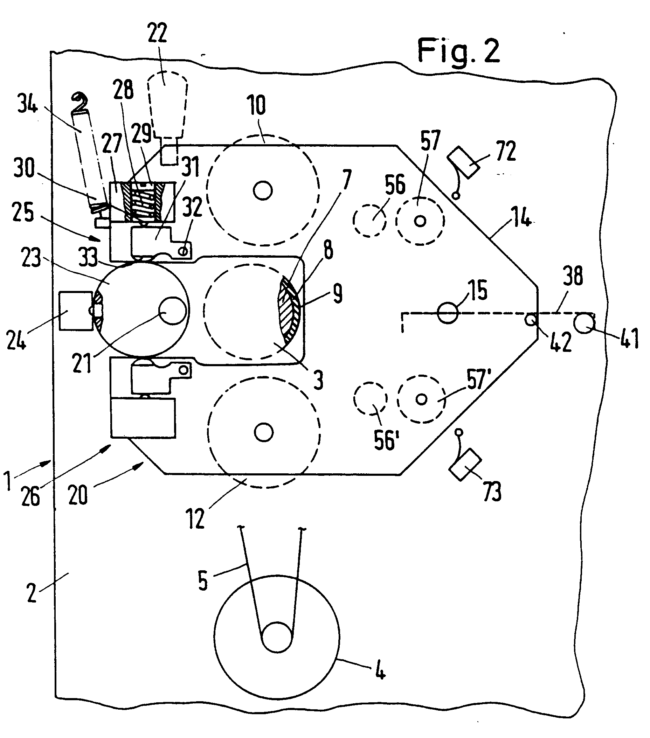

Schwenkt man nun den Hebel 22 in entgegengesetzter Richtung, so kann der Laminator wieder in die Mittelstellung zurückgeführt werden, wie sie in den Fig. 1 und 2 veranschaulicht ist. Wird der Hebel weiter geschwenkt, schließt der untere Preßspalt 13. Gleichzeitig wird der Einlaufplattenabschnitt 38 nach unten verschwenkt. Die Leitwalzen 56', 57' der Leitvorrichtung 51 werden aneinander gedrückt. Schließlich wird der Schalter 73 betätigt. Nunmehr kann ein Träger 35 über den Einlaufplattenabschnitt 38 dem unteren Preßspalt 13 zugeführt werden, wo er an seiner Unterseite mit einem Film 52 laminiert wird, während die Schutzfolie 53 auf der Aufwickelrolle 54 gesammelt wird. Wiederum spricht der Sensor 74 auf die hintere Kante des Trägers 35 an, so daß dieser mit Zeitverzögerung im Bereich der Schneidfläche 62 zur Ruhe kommt, wo die Bedienungsperson den Film abschneiden kann. Alle übrigen Maßnahmen, wie das Schließen der Klemmvorrichtung 63 und das Spannen des oberen Films mit Hilfe der Brems- und Spannvorrichtung 77 entsprechen dem zuvor beschriebenen Ablauf.

Insbesondere ist der Film 46 ein lichtempfindlicher Film und der Film 52 ein Schutzfilm. Zur Erzeugung eines Vierfarben-Andrucks kann der Träger nacheinander mit vier lichtempfindlichen Filmen laminiert werden, die jeweils mit einer der Druckfarben eingefärbt werden, während in einem letzten Durchgang ein Schutzfilm über diese vier lichtempfindlichen Filme gelegt wird.

Als lichtempfindliche Filme eignen sich vor allem solche Filme, die bei der Belichtung nicht aktinischer Strahlung ihre Klebrigkeit z.B. durch Photopolymerisation oder Photovernetzung verlieren. Solche Filme werden z.B. in den Verfahren zur Herstellung von Mehrfarbenprüfdrucken gemäß US 4 356 253 und EP 0 243 933 verwendet. Aber auch lichtempfindliche Filme, die bei der Belichtung aktinischer Strahlung klebrig werden, wie sie z.B. in US 4 243 741 und US 4 346 162 beschrieben werden, sind für die Herstellung von Mehrfarbenprüfdrucken mit dem erfindungsgemäßen Laminator geeignet. Als Schutzfilme können z. B. die in der europäischen Patentanmeldung EP-A-0 285 039 beschriebenen Filme verwendet werden, die eine störende glänzende Oberfläche verhindern.

## Patentansprüche

1. Laminator zum Laminieren eines Films auf einen Träger, mit einem zwischen einer ortsfest gelagerten Basiswalze und einer oberen Andruckwalze gebildeten oberen Preßspalt, dem der Träger über eine Einlaufplatte sowie ein Film von einer oberen Vorratsrolle nach Entfernung einer Schutzfolie zuführbar ist, wobei die obere Andruckwalze mittels einer Umschaltvorrichtung aus einer Ruhestellung, in der der obere Preßspalt geöffnet ist, in eine Arbeitsstellung, in der der obere Preßspalt geschlossen und der Walzenantrieb eingeschaltet ist, und zurück verstellbar ist, wobei die Basiswalze (3) mit einer unteren Andruckwalze (12) einen unteren Preßspalt (13) bildet, dem der Träger (35) über eine Einlaufplatte (40) alternativ zum oberen Preßspalt (11) und ein zweiter Film (52) von einer unteren Vorratsrolle (49) nach Entfernung einer Schutzfolie (53) zuführbar ist, und wobei die untere Andruckwalze (12) mittels einer Umschaltvorrichtung (20) aus einer Ruhestellung, in der der untere Preßspalt (13) geöffnet ist, in eine Arbeitsstellung, in der der untere Preßspalt geschlossen und der Walzenantrieb in entgegengesetzte Richtung eingeschaltet ist, und zurück verstellbar ist.

2. Laminator nach Anspruch 1, dadurch gekennzeichnet, daß die Basiswalze (3) angetrieben ist und die beiden Andruckwalzen (10, 12) beheizbar sind.

3. Laminator nach Anspruch 1 oder 2, gekennzeichnet durch eine gemeinsame Umschaltvorrichtung (20), in deren Endlagen jeweils die eine Andruckwalze (10, 12) die Arbeitsstellung und die andere Andruckwalze die Ruhestellung einnimmt, während in einer Zwischenstellung beide Andruckwalzen von der Basiswalze (3) abgehoben sind.

4. Laminator nach Anspruch 3, dadurch gekennzeichnet, daß die beiden Andruckwalzen (10, 12) in gemeinsamen Seitenteilen (14) gelagert sind, die um eine ortsfeste Achse (15) schwenkbar sind.

5. Laminator nach Anspruch 4, dadurch gekennzeichnet, daß die Umschaltvorrichtung (20) eine Schwenkachse (21) aufweist, die mittels eines Hebels (22) um einen vorbestimmten Winkel drehbar ist und zwei Exzenterscheiben (23) trägt, und daß die Seitenteile (14) je zwei einander gegenüberliegende Stützvorrichtungen (25, 26) aufweisen, die an den Exzenterscheiben angreifen.

6. Laminator nach Anspruch 5, dadurch gekennzeichnet, daß jede Stützvorrichtung (25, 26) eine vorgespannte Feder (28) aufweist, die zwischen Exzenterscheibe (23) und Seitenteil (14) wirksam ist.

7. Laminator nach einem der Ansprüche 4 bis 6, dadurch gekennzeichnet, daß an den Seitenteilen (14) je eine Feder (34) angreift, die das Gewicht der Seitenteile und der von ihnen getragenen Bauelemente zumindest teilweise kompensiert.

8. Laminator nach einem der Ansprüche 1 bis 7, dadurch gekennzeichnet, daß ein gemeinsamer Einlaufplattenabschnitt (38) vorgesehen ist, der zusammen mit den Andruckwalzen (10, 12) derart verstellbar ist, daß er auf den jeweils geschlossenen Preßspalt (11, 13) weist.

9. Laminator nach Anspruch 4 und 8, dadurch gekennzeichnet, daß der gemeinsame Einlaufplattenabschnitt (38) um eine ortsfeste Schwenkachse (41) schwenkbar und über einen Mitnehmer (42) von den schwenkbaren Seitenteilen (14) verstellbar ist.

10. Laminator nach Anspruch 9, dadurch gekennzeichnet, daß die Schwenkachse (41) des Einlaufplattenabschnitts (38), dessen Gelenk (42), die Schwenkachse (15) der Seitenteile (14) und die Achse der Basiswalze (3) in Durchlaufrichtung hintereinander angeordnet sind.

11. Laminator nach einem der Ansprüche 1 bis 10, dadurch gekennzeichnet, daß jedem Preßspalt (11, 13) ausgangsseitig eine Filmklemmvorrichtung (63, 67) zugeordnet ist.

12. Laminator nach einem der Ansprüche 1 bis 11, dadurch gekennzeichnet, daß jedem Preßspalt (11, 13) ausgangsseitig eine Schneidplatte (59, 61) zugeordnet ist, die an der Oberseite eine Schneidfläche (60, 62) trägt.

13. Laminator nach Anspruch 11 und 12, dadurch gekennzeichnet, daß zur Bildung der Filmklemmvorrichtungen (63, 67) die obere Schneidplatte (59) schwenkbar und mit einem Klemmabschnitt (65) gegen eine feststehende obere Klemmleiste (66) anlegbar ist und eine untere Klemmleiste (69) schwenkbar und gegen einen Klemmabschnitt (68) der feststehenden unteren Schneidplatte (61) anlegbar ist.

14. Laminator nach Anspruch 13, dadurch gekennzeichnet, daß der Klemmabschnitt (68) bzw. die Klemmleiste (66) eine elastische Auflage besitzt.

15. Laminator nach einem der Ansprüche 11 bis 14, dadurch gekennzeichnet, daß die Umschaltvorrichtung (20) eine Schwenkachse (21) aufweist, die Exzenter (71) zum Verschwenken der oberen Schneidplatte (59) und Hebel (70) zum Halten der unteren Klemmleiste (69) trägt.

16. Laminator nach einem der Ansprüche 4 bis 15, gekennzeichnet durch eine obere Leitvorrichtung (45) und eine untere Leitvorrichtung (51), die den Preßspalten (11, 13) im Weg des Films (46, 52) vorgeschaltet sind und je aus zwei Leitwalzen (56, 56', 57, 57') bestehen, von denen die eine ortsfest und die andere in den Seitenteilen (14) gelagert ist.

17. Laminator nach einem der Ansprüche 1 bis 16, dadurch gekennzeichnet, daß beide Vorratsrollen (43, 49) je mit einer Vorrichtung (77, 78) zum Bremsen und Spannen des Films versehen sind.

18. Laminator nach Anspruch 17, dadurch gekennzeichnet, daß die Vorrichtung (77, 78) zum Bremsen und Spannen ein Bremselement (79) aufweisen, das reibschlüssig auf die Vorratsrolle (43) wirkt, durch eine Feder belastet (80) ist, unter dem Einfluß des Abziehens des Films (46) um einen begrenzten Winkel schwenkbar und unter dem Einfluß der Feder um den begrenzten Winkel zurück schwenkbar ist.

19. Laminator nach einem der Ansprüche 4 bis 18, dadurch gekennzeichnet, daß Schalter (72, 73) zur Freigabe des Walzenantriebs im Seitenteil-Schwenkweg angeordnet und vom Seitenteil (14) jeweils in einer seiner Endlagen betätigbar sind.

20. Laminator nach einem der Ansprüche 1 bis 19, gekennzeichnet durch eine Sensorvorrichtung (74), die das Ende des einlaufenden Trägers (35) detektiert und in Abhängigkeit hiervon den Walzenantrieb mit Zeitverzögerung abschaltet.

21. Laminator nach einem der Ansprüche 1 bis 20, dadurch gekennzeichnet, daß die Basiswalze (3) einen Metallkern (7) besitzt und mit einer Antihaftschicht (9) versehen ist.

22. Laminator nach Anspruch 21, dadurch gekennzeichnet, daß zwischen Metallkern (7) und Antihaftschicht (9) eine elastische Schicht (8) vorgesehen ist.

23. Laminator nach Anspruch 21 oder 22, dadurch gekennzeichnet, daß der Durchmesser der Basiswalze (3) zu den Enden hin zunimmt.

## Claims

1. A laminator for laminating a film onto a support, with an upper pressure nip formed between a fixed roller and an upper pressure roller to which can be passed the support over a feed plate as well as a film from an upper supply roll after removal of a protective sheeting, whereby the upper pressure roller is adjustable back and forth by means of a shifting device from an idle position, in which the upper pressure nip is open into an operating position in which the upper pressure nip is closed and a roller drive is switched on, whereby
the fixed roller (3) forms with a lower pressure roller (12) a lower pressure nip (13) to which can be passed, alternatively to the upper pressure nip (11), the support (35) over a feed plate (40) and a second film (52) from a lower supply roll (49) after removal of a protective cover sheeting (53), and whereby the lower pressure roller (12) is adjustable back and forth by means of the shifting device (20) from an idle position in which the lower pressure nip (13) is open into an operating position in which the lower pressure nip is closed and the roller drive is switched on in the opposite direction.

2. The laminator in accordance with Claim 1, characterized in that the fixed roller (3) is driven, and the two pressure rollers (10, 12) can be heated.

3. The laminator in accordance with Claim 1 or 2, characterized by the shifting device (20) at stop settings of which that one of the pressure rollers (10, 12) assumes the operating position and the other pressure roller assumes the idle position, with an intermediate setting that lifts both of the pressure rollers away from the fixed roller (3).

4. The laminator in accordance with Claim 3, characterized in that the two pressure rollers (10, 12) are mounted in common side sections (14) that can be pivoted around a fixed axis (15).

5. The laminator in accordance with Claim 4, characterized in that the shifting device (20) has a pivot axis (21) that is rotatable by a predetermined angle by means of a lever (22) and bears two eccentric disks (23), and that side sections (14) have two support devices (25, 26) engaging opposite sides of the eccentric disks.

6. The laminator in accordance with Claim 5, characterized in that each support device (25, 26) has a pretensioned spring (28) that acts between the eccentric disk (23) and the side section (14).

7. The laminator in accordance with one of the Claims 4 to 6, characterized in that the side sections (14) are each acted upon by a spring (34) that counterbalances at least partially the weight of the side sections and attached construction elements.

8. The laminator in accordance with one of the Claims 1 to 7, characterized by a common feed plate segment (38) that is adjustable with the pressure rollers (10, 12) so that it points to the respective closed pressure nip (11, 13).

9. The laminator in accordance with Claim 4 and 8, characterized by a common feed plate segment (38) can be pivoted around a fixed pivot axis (41) and is adjustable by a cam (42) from the pivotable side sections (14).

10. The laminator in accordance with Claim 9, characterized that the pivot axis (41) of the feed plate segment (38), its joint (42), the pivot axis (15) of the side sections (14) and the axis of the fixed roller (3) are positioned in run-through-direction one behind the other.

11. The laminator in accordance with one of the Claims 1 to 10, characterized in that a clamping device (63, 67) is mounted on an exit side of each pressure nip (11, 13).

12. The laminator in accordance with one of the Claims 1 to 11, characterized in that a cutting platform (59, 61) with a cutting surface (60, 62) on a top side is mounted at an exit of each pressure nip (11, 13).

13. The laminator in accordance with Claim 11 and 12, characterized in that the clamping devices (63, 67) are formed by having an upper one of the cutting platforms (59) pivotable and with a clamping segment (65) that can be placed against a fixed upper clamping bar (66) that is pivotable and can be placed against a clamping segment (68) of a stationary lower one of the cutting platforms (61).

14. The laminator in accordance with Claim 13, characterized in that the clamping segment (68) and the clamping bar (66) have an elastic facing.

15. The laminator in accordance with one of the Claims 11 to 14, characterized in that the shifting device (20) has a pivot axis (21), bearing cams (71) to pivot the upper cutting platform (59) and levers (70) to hold the lower clamping bar (69).

16. The laminator in accordance with one of the Claims 4 to 15, characterized by an upper guide device (45) and a lower guide device (51) in the path of the films (46, 52) to the pressure nips (11, 13), each guide device consisting of two guide rollers (56, 56', 57, 57'), one being fixed and the other mounted on the side sections (14).

17. The laminator in accordance with one of the Claims 1 to 16 , characterized in that both supply rolls (43, 49) are each equipped with a device (77, 78) to brake and tension the film.

18. The laminator in accordance with Claim 17, characterized in that each one of the devices (77, 78) to brake and tension has a braking element (79) that engages one of the supply rolls (43) by friction contact, is loaded with a spring (80), can be pivoted by a limited angle when the respective film is unwound, and can be pivoted back by the spring by a limited angle.

19. The laminator in accordance with one of the Claims 4 to 18, characterized in that switches (72, 73) to release the roller drive are mounted in the pivot path of the side sections (14) and can be actuated by the side sections in each of their end positions.

20. The laminator in accordance with one of the Claims 1 to 19, characterized in that a sensing device (74) that detects the end of the incoming support (35) and as a function thereof switches off the roller drive after a time delay.

21. The laminator in accordance with one of the Claims 1 to 20, characterized in that the fixed roller (3) has a metal core (7) provided with a nonstick layer (9).

22. The laminator in accordance with Claim 21, characterized in that an elastic layer (8) is provided between the metal core (7) and the nonstick layer (9).

23. The laminator in accordance with Claim 21 or 22, characterized in that diameter of the fixed roller(3) increases toward its ends.

## Revendications

1. Dispositif de stratification pour stratifier un film sur un support, et comprenant un intervalle de pressage formé entre un cylindre de base monté tournant en un emplacement fixe et un cylindre supérieur de pressage, auquel intervalle, est susceptible d'être amené le support via une plaque d'alimentation, ainsi qu'un film depuis un rouleau supérieur de réserve, après, enlèvement d'une feuille de protection, le cylindre supérieur de pressage étant réglable à l'aide d'un organe de commutation pour passer d'une position de repos, dans laquelle l'intervalle supérieur de pressage est ouvert, dans une position de travail, dans laquelle l'intervalle supérieur de pressage est fermé tandis que l'entraînement en rotation des cylindres est mis en service, et l'inverse, dans lequel dispositif, le cylindre de base (3) forme avec un cylindre inférieur de pressage (12) un intervalle de pressage inférieur (13) dans lequel est susceptible d'être amené, alternativement par rapport à l'intervalle de pressage supérieur (11), le support (35) via une plaque d'alimentation (40) et un deuxième film (52) depuis un rouleau d'alimentation inférieur (49) après enlèvement d'une feuille de protection (53), et dans lequel dispositif, le cylindre inférieur de pressage (12) est réglable au moyen d'un organe de commutation (20) depuis une position de repos, dans laquelle l'intervalle inférieur de pressage (13) est ouvert, jusqu'à une position de travail, dans laquelle l'intervalle inférieur de pressage est fermé, et l'entraînement des cylindres est mis en service dans la direction opposée, et l'inverse.

2. Dispositif de stratification selon la revendication 1, caractérisé en ce que le cylindre de base (3) est entraîné (cylindre menant) et les deux cylindres de pressage (10, 12) sont susceptibles d'êtres chauffés.

3. Dispositif de stratification selon la revendication 1 ou 2, caractérisé par un organe de commutation commun (20), dans chacune des positions terminales duquel l'un des cylindres de pressage (10, 12) prend la position de travail tandis que l'autre cylindre de pressage prend la position de repos, et que, dans une position intermédiaire, les deux cylindres de pressage sont décollés du cylindre de base (3).

4. Dispositif de stratification selon la revendication 3, caractérisé en ce que les deux cylindres de pressage (10, 12) sont montés tournant dans des pièces latérales communes (14) et qui sont susceptibles de pivoter autour d'un axe localement fixe (15).

5. Dispositif de stratification selon la revendication 4, caractérisé en ce que l'organe de commutation (20) présente un axe de pivotement (21), qui est susceptible d'être entrainé en rotation d'un angle prédéterminé part l'intermédiaire d'un levier (22), et qui porte deux disques excentriques (23), et en ce que les pièces latérales (14) comportent chacune des organes de support (25, 26) placés à l'opposé l'un de l'autre et qui viennent en contact avec les disques excentriques.

6. Dispositif de stratification selon la revendication 5, caractérisé en ce que chaque organe de support (25, 26) comporte un ressort précontraint (26), qui exerce une force de réaction entre le disque excentrique (23) et la pièce latérale (14).

7. Dispositif de stratification selon l'une des revendications 4 à 6, caractérisé en ce que, sur chacune des pièces latérales (14) agit un ressort (34), qui compense au moins partiellement le poids de la pièce latérale et des composants qu'il porte.

8. Dispositif de stratification selon l'une des revendications 1 à 7, caractérisé en ce qu'il est prévu un tronçon commun de plaques d'alimentation (38), qui est susceptible d'être réglé avec les cylindres de pressage (10, 12), de telle manière qu'il soit orienté vers l'intervalle de pressage fermé correspondant (11, 13).

9. Dispositif de stratification selon les revendications 4 et 8, caractérisé en ce que le tronçon commun de plaques d'alimentation (38) est susceptible de pivoter autour d'un axe de pivotement (41) localement fixe et est réglable par l'intermédiaire d'un organe d'entraînement (42) par rapport aux pièces latérales (14) susceptibles de pivoter.

10. Dispositif de stratification selon la revendication 9, caractérisé en ce que l'axe de pivotement (41) du tronçon de plaque d'alimentation (38), son articulation (42), l'axe d'articulation (15) de la pièce latérale (14) et l'axe du cylindre de base (3) sont disposés les uns derrière les autres dans la direction de passage.

11. Dispositif de stratification selon l'une des revendications 1 à 10, caractérisé en ce que chaque intervalle de pressage (11, 13) est associé, du côté de la sortie, à un organe de princement de film (63, 67).

12. Dispositif de stratification selon l'une des revendications 1 à 11, caractérisé en ce qu'à chaque intervalle de pressage (11, 13) est associé, du côté de la sortie, à une plaque de coupe (59, 61), qui porte sur la face supérieure une surface de coupe (60, 62).

13. Dispositif de stratification selon les revendications 11 et 12, caractérisé en ce que, pour réaliser les organes de pincement de film (63, 67), la plaque de coupe supérieure (59) est susceptible de pivoter et d'être appliquée par un segment de pincement (65) contre une barrette supérieure fixe de pincement (66) et en ce qu'une barrette inférieure de pincement (69) est susceptible de pivoter et d'être appliquée contre un segment de pincement (68) de la plaque inférieure de coupe fixe (61).

14. Dispositif de stratification selon la revendication 13, caractérisé en ce que le segment de pincement (68) ou la barrette de pincement (66) présente un appui élastique.

15. Dispositif de stratification selon l'une des revendications 11 à 14, caractérisé en ce que l'organe de commutation (20) comporte un axe de pivotement (21), qui porte l'excentrique (71) pour faire pivoter la plaque de coupe supérieure (59) et le levier (70) qui maintient la barrette inférieure de pincement (69).

16. Dispositif de stratification selon l'une des revendications 4 à 15, caractérisé par un organe supérieur de guidage (45) et par un organe inférieur de guidage (51), qui sont disposés en amont de l'intervalle de pressage (11, 13) sur le trajet du film (46, 52) et se composent chacun de deux cylindres de guidage (56, 56', 57, 57') dont l'un est monté tournant dans des paliers localement fixes et dont l'autre est monté tournant dans des paliers portés par les pièces latérales (14).

17. Dispositif de stratification selon l'une des revendications 1 à 16, caractérisé en ce que les deux rouleaux d'alimentation (43, 49) sont munis chacun d'un organe (77, 78) pour freiner et tendre le film.

18. Dispositif de stratification selon la revendication 17, caractérisé en ce que l'organe (77, 78) pour freiner et pour tendre comporte un élément de freinage (79), qui agit par friction sur le rouleau d'alimentation (43), qui est sollicité par un ressort (80), et qui, sous l'influence du tirage du film (46), est susceptible de pivoter d'un angle limité, et qui, sous l'influence du ressort, est susceptible de pivoter en retour de l'angle limité.

19. Dispositif de stratification selon l'une des revendications 4 à 18 caractérisé en ce que des interrupteurs (72, 73) sont prévus sur le trajet de pivotement de la pièce latérale pour libérer l'entraînement des cylindres, et sont susceptibles chacun d'être actionnés par la pièce latérale (14) dans l'une de ses positions d'extrémité.

20. Dispositif de stratification selon l'une des revendications 1 à 19, caractérisé par un organe capteur (74), qui détecte l'extrémité du support (35) en cours de déplacement et qui, en fonction de cette détection, met hors service de façon temporisée l'entraînement des cylindres.

21. Dispositif de stratification selon l'une des revendications 1 à 20, caractérisé en ce que le cylindre de base (3) comporte un noyau métallique (7) et est muni d'une couche anti-adhérente (9).

22. Dispositif de stratification selon la revendication 21, caractérisé en ce qu'il comporte, entre le noyau métallique (7) et la couche anti-adhérente (9), une couche élastique (8).

23. Dispositif de stratification selon la revendication 21 ou 22, caractérisé en ce que le diamètre du cylindre de base (3) augmente en s'éloignant vers les extrémités.
